Europäisches Patentamt

European Patent Office

Office européen des brevets

(19)

(11) Numéro de publication : **0 368 964 B1**

(12) # FASCICULE DE BREVET EUROPEEN

(45) Date de publication du fascicule du brevet :
**08.07.92 Bulletin 92/28**

(51) Int. Cl.⁵ : **C10G 33/04, C02F 1/00**

(21) Numéro de dépôt : **89905415.9**

(22) Date de dépôt : **20.04.89**

(86) Numéro de dépôt international :
**PCT/FR89/00185**

(87) Numéro de publication internationale :
**WO 89/10392 02.11.89 Gazette 89/26**

(54) **PROCEDE D'EXTRACTION DE L'EAU MELANGEE A UN FLUIDE LIQUIDE.**

(30) Priorité : **22.04.88 FR 8805491**

(43) Date de publication de la demande :
**23.05.90 Bulletin 90/21**

(45) Mention de la délivrance du brevet :
**08.07.92 Bulletin 92/28**

(84) Etats contractants désignés :
**GB IT NL**

(56) Documents cités :
**GB-A- 426 793**
**GB-A- 1 074 144**
**Chemical Abstracts, volume 87, no 26, 26 December 1977, (Columbus, Ohio, US), see page 138, abstract 204120v, & SU, A,571503 (ALL-UNION SCIENTIFIC-RESEARCH INSTITUTE OF PETROLEUM GAS) 05 September 1977**

(73) Titulaire : **INSTITUT FRANCAIS DU PETROLE**
**4, Avenue de Bois Préau**
**F-92502 Rueil-Malmaison (FR)**

(72) Inventeur : **SUGIER, André**
**34, avenue de la Châtaigneraie**
**F-92500 Rueil-Malmaison (FR)**
Inventeur : **BOURGMAYER, Paul**
**87, avenue Paul-Doumer**
**F-92500 Rueil-Malmaison (FR)**
Inventeur : **ROJEY, Alexandre**
**29-33, rue Henri-Regnault**
**F-92380 Garches (FR)**

(74) Mandataire : **Andreeff, François**
**INSTITUT FRANCAIS DU PETROLE 4, avenue de Bois-Préau**
**F-92502 Rueil-Malmaison (FR)**

EP 0 368 964 B1

Jouve, 18, rue Saint-Denis, 75001 PARIS

## Description

L'invention concerne un procédé d'extraction de l'eau mélangée à un fluide liquide par formation d'hydrates de gaz dispersés au moyen d'au moins un gaz et d'un additif.

Ce gaz qui forme des hydrates avec l'eau peut être, par exemple, du méthane de l'éthane, de l'éthylène, du propane, du propène, du n-butane, de l'i-butane, de l'H2S, du CO2, et peut provenir de gisements naturels, tels de gisement de gaz naturel d'hydrocarbures, de gaz de pétrole ou d'autres gaz.

Ces hydrates se forment lorsque de l'eau se trouve en présence du gaz, que celui-ci soit à l'état libre, ou à l'état dissous dans un fluide liquide tel un hydrocarbure liquide, et lorsque la température atteinte par le mélange notamment d'eau, de gaz et éventuellement de fluide liquide, tel de l'huile ou un condensat, devient inférieure à la température thermodynamique de formation des hydrates, cette température étant déterminée pour une composition de gaz connue et lorsque leur pression est fixée. La température thermodynamique est d'autant plus haute que la pression du ou des gaz est forte. C'est à dire que plus la pression est élevée moins il faudra refroidir le gaz et l'eau pour former des hydrates.

L'invention est particulièrement intéressante pour le transport de la production pétrolière et gazière lorsque les conditions requises pour la formation d'hydrates sont atteintes.

En effet, le gaz naturel ou le pétrole produit par un gisement comporte le plus souvent de l'eau, qui sous certaines conditions thermodynamiques, telles les conditions climatiques de mer du Nord, hivernales ou polaires, réagit avec le ou les gaz pour former des hydrates qui colmatent les conduites et créent des pertes financières importantes.

Le document Chemical Abstracts vol. 87, 1977, 204120v enseigne la séparation de l'eau sous forme d'hydrates contenue dans un liquide pétrolier.

Il est connu dans le brevet GB-1.074.144 une méthode qui permet d'obtenir de l'eau purifiée d'une solution aqueuse saline en utilisant la formation d'hydrates du propane et des étapes de lavage d'hydrate ainsi formé avant de décomposer l'hydrate pour obtenir de l'eau purifiée.

Ces deux documents ne concernent pas le domaine du transport de fluides.

Selon l'invention, on forme des hydrates sous forme dispersée de manière à pouvoir séparer, (facilement) l'eau contenue dans l'hydrate, du fluide liquide auquel celle-ci est mélangée.

D'une manière avantageuse, cette formation d'hydrate sous forme dispersée peut-être réalisée avant ou au cours du transport de fluides atteignant les conditions de formation d'hydrates.

Ces conditions se rencontrent naturellement lorsqu'une conduite de transfert est disposée au fond de la mer où l'eau peut être par exemple à une température de 3 ou 4°C.

Ainsi, d'une part, la formation d'hydrates qui se produit naturellement, complétement ou en partie seulement, évite toute ou une certaine consommation d'énergie d'hydratation indispensable à l'extraction de l'eau, et d'autre part la dispersion des hydrates évite leur coalesence et le blocage des conduites.

La possibilité de former des hydrates se dispersant au sein d'un liquide a été découverte lorsque l'on a trouvé que certains tensio-actifs, qui jusqu'à maintenant n'étaient pas utilisés dans ce but, présentent une excellente aptitude à modifier le mécanisme de formation des hydrates.

En effet, au lieu de constater que les hydrates s'agglomèrent les uns aux autres en formant des blocs et des bouchons très solides, ou des dépôts dans les appareils où circule le fluide générant des hydrates, il a été observé, dans une large plage de température, que ces tensio-actifs dispersent ces hydrates dans ce fluide et empêchent alors leur agglomération.

Lorsqu'on soumet un mélange de gaz, de fluides et de tensio-actifs donnés à une température notablement plus basse que la température de début de formation des hydrates, il se crée un épaississement du fluide, sans qu'il y ait de formation de blocs ou de bouchons, cet épaississement étant d'autant plus fort que la température est basse.

Ces additifs sont très avantageux, d'une part par leur efficacité :
– concentration très faible (généralement inférieure à 2 % voire à 0,5 % en poids par rapport à l'eau),
– et d'autre part pour leur coût modéré.

L'invention fournit un procédé d'extraction de l'eau mélangée à un fluide liquide substantiellement insoluble dans ladite eau, notamment caractérisé en ce qu'on effectue les étapes suivantes :
– on forme, au sein du fluide, une dispersion d'hydrates d'un gaz, ces hydrates étant formés à partir de l'eau et du gaz en quantité suffisante, le gaz étant adapté à former des hydrates,
– on sépare les hydrates d'au moins la plus grande partie du fluide, les hydrates se trouvant éventuellement avec une partie restante du fluide, et
– on décompose les hydrates précédemment concentrés de manière à obtenir le gaz et l'eau.

Avant ou au cours de la formation d'hydrates, on utilise un additif adapté à produire les hydrates sous forme dispersée.

Le fluide liquide pourra comporter des hydrocarbures.

D'une manière avantageuse, l'additif, l'eau et ledit fluide seront adaptés pour permettre une bonne dispersion du fluide dans l'eau.

L'additif pourra comporter au moins un élément du groupe des esters de polyols et d'acides carboxyliques substitués ou non substitués, et du groupe des hydroxycarbylamides d'acides carboxyliques substitués ou non substitués.

On pourra former les hydrates en abaissant la température et/ou en augmentant la pression du gaz et du mélange comportant le fluide et l'eau.

Après avoir décomposé les hydrates, l'eau provenant des hydrates et la partie restante de fluide pourront être séparées l'une de l'autre.

Après avoir concentré les hydrates,

. on pourra les introduire dans un réacteur de dissociation, éventuellement mélangés à ladite partie restante de fluide,

. on pourra réchauffer le réacteur par des moyens adaptés à permettre la décomposition des hydrates,

. on pourra agiter le mélange formé par le fluide, l'eau produite par la décomposition des hydrates et les hydrates,

. on pourra éliminer du réacteur le gaz produit par ladite décomposition, et

. on pourra évacuer du réacteur une fraction du mélange exempte d'hydrate.

On pourra séparer l'eau et le fluide contenu dans la fraction du mélange évacué du réacteur et exempte d'hydrate.

On pourra utiliser au moins une partie du gaz provenant de la décomposition des hydrates pour réchauffer ledit réacteur.

On pourra utiliser le procédé à l'extraction de l'eau contenue dans des effluents pétroliers, ledit gaz adapté à former des hydrates comportant un gaz pétrolier.

Les effluents étant transportés dans des conditions où des hydrates se forment, on pourra ajouter aux effluents un additif adapté à produire les hydrates sous forme dispersée avant ou pendant le transport de ces effluents.

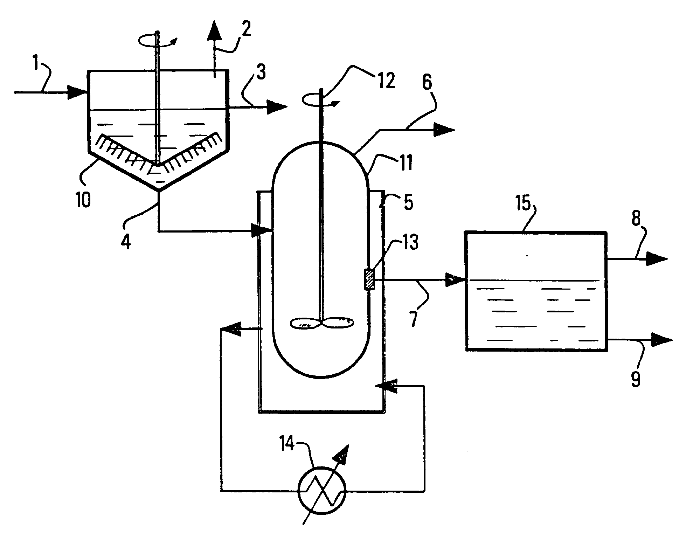

L'invention sera bien comprise et ses avantages apparaitront clairement à la lecture de la description qui suit d'un exemple non limitatif de réalisation illustré par la figure annexée représentant schématiquement une unité d'extraction d'eau fonctionnant avec le procédé selon l'invention.

Le fluide liquide mélangé à l'eau devant en être extrait est préalablement additionné d'au moins un additif et d'un gaz appropriés et soumis à des conditions thermodynamiques de température et de pression permettant de former des hydrates de gaz dispersés au sein du fluide.

Dans l'exemple de réalisation, le fluide liquide est un condensat extrait avec de l'eau et du gaz d'un gisement pétrolier marin, ce gaz formant des hydrates avec l'eau.

Une proportion en volume typique de l'eau et du condensat est par exemple de 5 parties d'eau pour 95 parties de condensat.

La composition pondérale du condensat peut être pour les molécules ayant moins 11 atomes de carbone, 22 % d'un mélange de paraffines, d'isoparaffines, de naphtèmes d'aromatiques. Le gaz du gisement comprend en volume 98 % de méthane et 2 % d'éthane.

Le mélange provenant du gisement est additionné de diéthanolamide du coprah à raison de 0,2 % en poids par rapport à l'eau. Ce mélange est ensuite transporté au fond de la mer sur plusieurs dizaines de kilométres où il atteint la température du fond voisine de 3°C voire inférieure du fait de l'effet JOULE-THOMSON produit par la détente du méthane et sa vaporisation produites par l'abaissement de la pression due aux pertes de charges en ligne. La perte de charge maximale admise ordinairement est de l'orde de 1 bar par kilomètre. Dans l'exemple décrit, le puits débite sous une pression de 100 bars au niveau du fond de la mer. La température minimale atteinte par la mélange étant de 1°C, associée aux conditions de pression et la présence d'additif adapté, permet la formation d'hydrates sous forme dispersée.

Quasiment toute l'eau contenue dans le mélange se retrouve dans les hydrates.

Le mélange, ayant atteint le niveau de la surface émergée des terres, est dirigé vers le séparateur 10 dans lequel il pénètre par l'orifice 1 sous une pression de 50 bars.

Dans ces conditions, le rapport volumique du gaz sur le condensat et de 100 m³/m³ et une proportion de 25 % molaire de gaz par rapport au condensat est dissous dans ce dernier. La densité des hydrates est de 0,91 et celle du condensat inférieure à 0,8.

Ce séparateur 10 sépare, le gaz qui s'évacue par la sortie haute 2, du condensat qui s'écoule par la sortie moyenne 3, et les hydrates mélangés avec le reste de condensat s'éliminent par la sortie inférieure 4. Les proportions restantes de condensat et d'hydrates à la sortie 4 sont respectivement en poids 1/3 pour 2/3.

Le séparateur 10 utilisé et représenté est un séparateur à décantation gravitaire comportant un racleur, mais on pourrait tout aussi bien utiliser un séparateur par flottation, centrifugation, filtration, un hydrocyclone, etc.

Les hydrates concentrés et mélangés au condensat provenant de la sortie inférieure 4 sont véhiculés vers l'entrée 5 d'un réacteur de dissociation. Dans ce réacteur, la pression de 7 bars et la température maintenue constante à + 15°C permettent la décomposition des hydrates. Le mélange formé par le condensat, l'eau produite par la décomposition des hydrates et les hydrates est agité par un agitateur 12 de manière à augmenter la vitesse de décomposition.

Le gaz produit par la décomposition des hydrates est éliminé du réacteur par la sortie supérieure 6, alors qu'une fraction du mélange comportant l'eau et le condensat et exempte d'hydrate est évacué du réacteur par la sortie 7. Des moyens de séparation 13, tels un filtre pourvu d'un dispositif anti-colmatage, empêchent les hydrates d'emprunter la sortie 7. Le réacteur 11 est réchauffé par des moyens de chauffage comportant, par exemple, un four 14 alimenté par une partie du gaz provenant de la sortie supérieure 6 du réacteur, ce four réchauffant un fluide caloporteur en contact avec le réacteur.

La puissance requise pour ce four 14 qui est de 140 KW pour un débit de mélange de 50 000Kg/h, peut être largement fournie par le gaz issu du réacteur (2 MW). On pourra remplacer le four 14 par un échangeur de chaleur succeptible d'apporter de l'énergie.

La sortie 7 traversée par l'eau et le condensat est reliée à des moyens de décantation, tel un bac, qui permettent de les séparer l'un et l'autre. Le condensat surnageant sur l'eau est évacué par la sortie supérieure 8 alors que cette dernière est éliminée via la sortie inférieure 9.

La pression dans ces moyens de décantation est maintenue à 2 bars. Le tableau suivant réalise le bilan massique (Kg/h) des transferts de matière dans l'unité d'extraction précédemment décrite au niveau des différentes entrées et sorties des appareils pour un débit de fluide à traiter de 50.000 Kg/h.

La teneur en additif disperseur d'hydrates étant 0,2 % en poids par rapport à l'eau, le transit horaire d'additif est de 4,4 Kg/h. Cet additif, qui n'est pas récupéré dans l'unité d'extraction, se retrouve pour une grande part avec l'eau extraite et n'est pas introduit dans le bilan.

Le méthane entrant dans ce bilan massique est aussi bien gazeux que liquide et mélangé dans le condensat.

## BILAN MASSIQUE (Kg/h)

| ENTREE OU SORTIE | LIQUIDE | GAZ | HYDRATES | EAU | CONDENSAT | METHANE |
|---|---|---|---|---|---|---|
| 1 | 45 840 | 1 880 | 2 280 | 0 | 43 887 | 3 833 |
| 2 | 0 | 1 880 | 0 | 0 | 0 | 1 880 |
| 3 | 44 701 | 0 | 0 | 0 | 42 797 | 1 904 |
| 4 - 5 | 1 139 | 0 | 2 280 | 0 | 1 090 | 49 |
| 6 | 0 | 133 | 0 | 0 | 0 | 133 |
| 7 | 3 286 | 0 | 0 | 2 196 | 1 090 | 0 |
| 8 | 1 090 | 0 | 0 | 0 | 1 090 | 0 |
| 9 | 2 196 | 0 | 0 | 2 196 | 0 | 0 |

Dans l'exemple de réalisation précédemment décrit, les hydrates se forment naturellement dans une conduite de transfert. On ne sortira pas du cadre de l'invention en produisant des hydrates par tout autre moyen adapté, tels des unités de réfrigération et/ou de compression dudit liquide et/ou dudit gaz.

De la même manière que l'on a déshydraté le condensat, on pourra assécher toutes sortes de produits chimiques, tels des produits pharmaceutiques ne supportant ni de faibles pressions, ni des élévations de températures.

Comme l'on extrait l'eau d'un fluide liquide, on pourra séparer l'eau d'un fluide liquide ne formant pas d'hydrates dans le but de récupérer l'eau. Le procédé permet alors la production d'eau dépolluée, telle de l'eau désalée.

Sans sortir du cadre de l'invention, pour le mélange traité par le procédé, les quantités de fluide liquide et d'eau pourront être très différentes du cas de la production pétrolière, par exemple de 20 parties en poids de fluide pour 100 parties en poids d'eau, voire 40 parties en poids pour 100 parties en poids d'eau.

De même, la quantité et la nature des additifs utilisés seront adaptées à la nature et à la quantité de l'eau et du fluide.

On pourra ajouter au fluide liquide et à l'eau un autre composé liquide.

## Revendications

1. Procédé d'extraction de l'eau mélangée à un fluide liquide, substantiellement insoluble dans ladite eau, caractérisé en ce qu'on effectue les étapes suivantes :
   – on forme une dispersion d'hydrates d'un gaz au sein dudit fluide en présence d'un additif, lesdits hydrates étant formés à partir de ladite eau et dudit gaz en quantité suffisante, ledit gaz étant adapté à former des hydrates et ledit additif étant adapté à produire les hydrates sous forme dispersive,
– on sépare les hydrates d'au moins la plus grande partie du fluide, les hydrates se trouvant éventuellement concentrées avec une partie restante du fluide, et
– on décompose lesdits hydrates précédemment concentrés de manière à obtenir ledit gaz et ladite eau.

2. Procédé selon la revendication 1, caractérisé en ce qu'on ajoute l'additif avec ledit fluide avant ou au cours de la formation d'hydrates.

3. Procédé selon la revendication 2, caractérisé en ce que ledit additif comporte au moins un élément du groupe des esters de polyols et d'acides carboxyliques substitués ou non substitués, et du groupe des hydroxycarbylamides d'acides carboxyliques substitués ou non substitués.

4. Procédé selon l'une des revendications 1 à 3, caractérisé en ce qu'on forme les hydrates en abaissant la température et/ou en augmentant la pression dudit gaz et dudit mélange comportant le fluide et ladite eau.

5. Procédé selon l'une des revendications 1 à 4, caractérisé en ce qu'après avoir décomposé les hydrates, ladite eau provenant des hydrates et ladite partie restante de fluide sont séparées l'une de l'autre.

6. Procédé selon l'une des revendications 1 à 5, caractérisé en ce qu'après avoir concentré les hydrates,
– on les introduit dans un réacteur de dissociation, éventuellement mélangés à ladite partie restante de fluide,
– on réchauffe le réacteur par des moyens adaptés à permettre la décomposition des hydrates,
– on agite le mélange formé par le fluide, l'eau produite par la décomposition des hydrates et les hydrates,
– on élimine du réacteur le gaz produit par ladite décomposition,
– on évacue du réacteur une fraction du mélange exempte d'hydrate.

7. Procédé selon la revendication 6, caractérisé en ce qu'on sépare l'eau et le fluide contenu dans ladite fraction du mélange évacué du réacteur et exempte d'hydrate.

8. Procédé selon l'une des revendications 1 à 7, caractérisé en ce qu'on utilise au moins une partie du gaz provenant de la décomposition des hydrates pour réchauffer ledit réacteur.

9. Procédé selon l'une des revendications 1 à 8, caractérisé en ce que ledit fluide liquide comporte un hydrocarbure.

10. Application du procédé selon l'une des revendications 1 à 9, à l'extraction de l'eau contenue dans des effluents pétroliers, ledit gaz adapté à former des hydrates comportant un gaz pétrolier.

11. Procédé selon l'une des revendications 1 à 9, appliqué au traitement des effluents pétroliers selon la revendication 10, lesdits effluents étant transportés dans des conditions où des hydrates se forment, caractérisé en ce qu'on ajoute aux effluents un additif adapté à produire les hydrates sous forme dispersée avant ou pendant le transport de ces effluents.

12. Application du procédé selon l'une des revendications 1 à 11, à la production d'eau désalée.

**Patentansprüche**

1. Verfahren zur Extraktion von Wasser, das im Gemisch mit einem flüssigen Fluid vorliegt, das im wesentlichen in Wasser unlöslich ist, dadurch gekennzeichnet, daß man die folgenden Stufen durchführt:
– Bildung einer Dispersion von Hydraten eines Gases im Mi lieu des Fluids in Gegenwart eines Additivs, wobei die Hydrate aus dem Wasser und dem Gas in ausreichender Menge gebildet werden, wobei das Gas zur Bildung von Hydraten geeignet ist und das Additiv zur Erzeugung von Hydraten in dispergierter Form geeignet ist,
– Abtrennung der Hydrate mindestens von dem größten Teil des Fluids, wobei die Hydrate gegebenenfalls in konzentrierter Form mit einem zurückbleibenden Teil des Fluids vorliegen, und
– Zersetzung der obengenannten konzentrierten Hydrate in der Weise, daß man das genannte Gas und das genannte Wasser erhält

2. Verfahren nach Anspruch 1, dadurch gekennzeichnet, daß man das Additiv zusammen mit dem Fluid vor oder im Verlaufe der Bildung der Hydrate zugibt.

3. Verfahren nach Anspruch 2, dadurch gekennzeichnet, daß das Additiv umfaßt mindestens einen Vertreter aus der Gruppe der substituierten oder unsubstituierten Carbonsäurepolyolester und der Gruppe der substituierten oder unsubstituierten Carbonsäurehydroxycarbylamide .

4. Verfahren nach einem der Ansprüche 1 bis 3, dadurch gekennzeichnet, daß man die Hydrate bildet, indem man die Temperatur herabsetzt und/oder den Druck erhöht des Gases und des Gemisches, welches das Fluid und das Wasser enthält.

5. Verfahren nach einem der Ansprüche 1 bis 4, dadurch gekennzeichnet, daß nach dem Zersetzen der Hydrate das aus den Hydraten stammende Wasser und der zurückbleibende Teil des Fluids voneinander getrennt werden.

6. Verfahren nach einem der Ansprüche 1 bis 5, dadurch gekennzeichnet, daß man nach dem konzentrieren der Hydrate

– diese in einen Dissoziationsreaktor einführt, gegebenen falls im Gemisch mit dem zurückbleibenden Teil des Fluids,

– den Reaktor mittels Einrichtungen wiedererwärmt, die geeignet sind, die Zersetzung der Hydrate zu erlauben,

– die von dem Fluid, dem durch die Zersetzung der Hydrate gebildeten Wasser und den Hydraten gebildete Mischung rührt,

– das bei dieser Zersetzung gebildete Gas aus dem Reaktor eliminiert und

– aus dem Reaktor eine Fraktion der hydratfreien Mischung abzieht.

7. Verfahren nach Anspruch 6, dadurch gekennzeichnet, daß man das Wasser und das Fluid, das in der genannten Fraktion enthalten ist, von der aus dem Reaktor abgezogenen und von einem Hydrat freien Mischung trennt.

8. Verfahren nach einem der Ansprüche 1 bis 7, dadurch gekennzeichnet, daß man mindestens einen Teil des aus der Zersetzung der Hydrate stammenden Gases für die Wiedererwärmung des Reaktors verwendet.

9. Verfahren nach einem der Ansprüche 1 bis 8, dadurch gekennzeichnet, daß das flüssige Fluid einen Kohlenwasserstoff enthält bzw. umfaßt.

10. Anwendung des Verfahrens nach einem der Ansprüche 1 bis 9 auf die Extraktion des Wassers, das in Erdöl-Abströmen enthalten ist, wobei das zur Bildung der Hydrate geeignete Gas ein Erdölgas enthält.

11. Verfahren nach einem der Ansprüche 1 bis 9, angewendet auf die Behandlung der Erdölabströme nach Anspruch 10, wobei die Abströme unter Bedingungen transportiert werden, unter denen sich Hydrate bilden, dadurch gekennzeichnet, daß man den Abströmen ein Additiv zusetzt, das geeignet ist, vor oder während des Transports dieser Abströme die Hydrate in dispergierter Form zu bilden.

12. Anwendung des Verfahrens nach einem der Ansprüche 1 bis 11 auf die Herstellung von entsalztem Wasser.

## Claims

1. Process for extracting the water mixed with a liquid fluid, substantially insoluble in the water, characterised by carrying out the following steps :

– forming a dispersion of hydrates of a gas within the fluid in the presence of an additive, the hydrates being formed from the water and the gas in sufficient quantity, wherein the gas is suitable for forming hydrates in dispersed form,

– separating the hydrates from at least the greater part of the fluid, the hydrates possibly being concentrated with a remaining part of the fluid, and

– breaking down the previously concentrated hydrates so as to obtain gas and water.

2. Process in accordance with claim 1, characterised in that the additive is added to the fluid before or during the formation of hydrates.

3. Process in accordance with claim 2, characterised in that the additive contains at least one element from the group of polyol esters and substituted or non-substituted carboxylic acids and the group of hydroxycarbylamides of substituted or non-substituted carboxylic acids.

4. Process in accordance with one of claims 1 to 3, characterised in that the hydrates are formed by lowering the temperature and/or by increasing the pressure of the gas and the mixture containing the fluid and water.

5. Process in accordance with one of claims 1 to 4, characterised in that, after the hydrates have been broken down, the water from the hydrates and the remaining part of the fluid are separated from each other.

6. Process in accordance with one of claims 1 to 5, characterised in that, after the hydrates have been concentrated,

– they are fed into a dissociation reactor, possibly mixed with the remaining part of the fluid,

– the reactor is heated by means designed to enable the hydrates to break down,

– the mixture formed by the fluid, the water produced by the breakdown of the hydrates and the hydrates are agitated,

– the gas produced by the breakdown is removed from the reactor,

– a hydrate-free fraction of the mixture is removed from the reactor.

7. Process in accordance with claim 6, characterised in that the water and the fluid contained in the hydrate-free fraction of the mixture removed from the reactor are separated.

8. Process in accordance with one of claims 1 to 7, characterised in that at least part of the gas produced by the breaking down of the hydrates is used to heat the reactor.

9. Process in accordance with one of claims 1 to 8, characterised in that the liquid fluid contains a hydrocarbon.

10. Application of the process in accordance with one of claims 1 to 9 to the extraction of water contained in petroleum effluents, the gas being suitable for the formation of hydrates containing a petroleum gas.

11. Process in accordance with one of claims 1 to 9 applied to the treatment of petroleum effluents in accordance with claim 10, wherein the effluents are transported under conditions in which hydrates form, characterised in that an additive that is conducive to the production of hydrates in dispersed form before or during transportation of the effluents is added to the effluents.

12. Application of the process in accordance with one of claims 1 to 11 to the production of desalinated water.